# EUROPEAN PATENT SPECIFICATION

(11) **EP 3 897 151 B1**
(45) Date of publication and mention of the grant of the patent: **22.04.2026**
(21) Application number: 19829414.2
(22) Date of filing: 09.12.2019
(51) Int. Cl.: A01N 43/50, A01N 25/30, A01P 13/00

(54) **HERBICIDAL COMPOSITION**
HERBIZIDZUSAMMENSETZUNG
COMPOSITION HERBICIDE

(30) Priority: 18.12.2018 EP 18213632
(43) Date of publication of application: 27.10.2021
(73) Proprietor: BASF Agrochemical Products B.V., 6835 EA Arnhem (NL)
(72) Inventor: KRAUS, Helmut, Research Triangle Park, NC 27709 (US); ZAGAR, Cyrill, Research Triangle Park, NC 27709 (US); SEISER, Tobias, 67117 Limburgerhof (DE); BESSAI, Johannes, 67117 Limburgerhof (DE); DIMITRIADI, Tatiana, 67117 Limburgerhof (DE); GRIVEAU, Yannick, 67117 Limburgerhof (DE); REID, Danielle, Research Triangle Park, NC 27709 (US); VAN THIELEN, Nocha, Research Triangle Park, NC 27709 (US); PETERS, JDavid, Research Triangle Park, NC 27709 (US); BROWN, Jeffrey A, Research Triangle Park, NC 27709 (US)
(74) Representative: BASF IP Association
(86) International application number: PCT/EP2019/084126
(87) International publication number: WO 2020/126580

(56) References cited:
- CN-A- 107 602 533
- CN-A- 107 602 533
- US-A- 6 060 430
- US-A- 6 060 430
- US-A1- 2007 238 618
- US-A1- 2007 238 618
- US-A1- 2014 073 510
- US-A1- 2014 073 510
- US-B1- 6 214 768
- US-B1- 6 214 768
- VARON. JACOB M.D: "FEMININE HYGIENE SANITARY NAPKINS FOR WOUND DRESSINGS", PLASTIC AND RECONSTRUCTIVE SURGERY, vol. 103, no. 5, 1 April 1999 (1999-04-01), United States, pages 1543, XP093358377, ISSN: 0032-1052, Retrieved from the Internet <URL:https://journals.lww.com/plasreconsurg/citation/1999/04020/feminine_hygiene_sanitary_napkins_for_wound.48.aspx>
- DARIO BRAGA ET AL: "Imazamox: A Quest for Polymorphic Modifications of a Chiral and Racemic Herbicide", CRYSTAL GROWTH & DESIGN., vol. 14, no. 3, 20 February 2014 (2014-02-20), US, pages 1430 - 1437, XP055581783, ISSN: 1528-7483, DOI: 10.1021/cg4019025
- DARIO BRAGA ET AL: "Imazamox: A Quest for Polymorphic Modifications of a Chiral and Racemic Herbicide", CRYSTAL GROWTH & DESIGN., vol. 14, no. 3, 20 February 2014 (2014-02-20), US, pages 1430 - 1437, XP055581783, ISSN: 1528-7483, DOI: 10.1021/cg4019025

## Description

The present invention relates to the use of herbicidal compositions containing R-imazamox as active ingredient for the selective control of undesirable vegetation in cultures of crop plants, especially in crops which are tolerant to imidazolinone herbicides.

In crop protection, it is principally desirable to increase the specificity and the reliability of the action of active compounds. For herbicides in particular, it is desirable that the crop protection products control the harmful plants effectively and, at the same time, are tolerated by the useful plants in question.

Imazamox (IUPAC: 2-[(*RS*)-4-isopropyl-4-methyl-5-oxo-2-imidazolin-2-yl]-5-methoxy-methylnicotinic acid), as well as its salts and esters, is a well-known broad spectrum herbicide from the group of the imidazolinone herbicides (see C.D.S Tomlin (Ed.), The Pesticide Manual, 14th ed., 2006, BCPC Alton, Hampshire, UK, p. 587 ff.). Imazamox is known to be absorbed by the foliage or roots of the plants and effectively blocks the synthesis of branched chain amino acids by inhibition of acetolactate synthase (ALS inhibitor or AHAS inhibitor). Imazamox provides highly effective control of several annual and perennial grass and broadleaf weed species. Imazamox is registered for several legume crops and imidazolinone tolerant crops, such as rice, wheat, corn, lentil, sunflower and oilseed rape (canola). Imidazolinone tolerant crops are also termed Clearfield^{®} crops. The herbicidal activity and the activity spectrum, however, are sometimes limited. In order to achieve a reliable herbicidal action, it has been recommended to apply imazamox in combination with adjuvants, such as Dash^{®}. Formulations of imazamox, comprising the active ingredient as racemate, are marketed under the trade names Beyond^{®}, Raptor^{®} and Sweeper^{®}, Clearfield Vantiga^{®}, Cleranda^{®}, Clearvis^{®} or Cleravo^{®}. Cleravo^{®}, is a suspension concentrate containing 35 g/l imazamox and 250 g/l quinmerac.

Processes for the synthesis of the R-enantiomer of imazamox are known from EP 1 050 533 and US 6,339,158. CN 107602533 describes an HPLC-method for chiral resolution of the isomers.

The herbicidal effect of combinations of the R-enantiomer of an imidazolinone compound and the R-enantiomer of a second different imidazolinone compound, such as R-imazamox + R-imazapyr, R-imazamox + R-imazaquin, and R-imazamox + R-imazethapyr, was described in EP 913 089. Furthermore, the combination of R-imazethapyr + R-imazapyr demonstrated crop selectivity; no or slight injury, such as stunting or chlorosis, was observed in imidazolinone tolerant corn.

Control of pitted morningglory and purple nutsedge by combinations of R-imazamox + glyphosate is described in US 6,214,768 and US 6,277,787.

Jing Wei et al. found that the chiral herbicide imazamox poses enantioselective phytotoxicity on maize seedlings: the order of toxicity is R-imazamox > Rac-imazamox > S-imazamox *(*Bull Environ Contam Toxicol (2016) 96:242-247*).*

C. Wang et al. discuss in their review on "Enantioselective Phytotoxicity and the Relative Mechanism of Chiral Herbicides" (Current Protein and Peptide Science, 2017, 15-21) enantioselective phytotoxicity of chiral herbicides, i.a. of the imidazolinone Imazapyr. The authors find that the herbicidally active enantiomer, R-imazapyr, displayed more phytotoxicity to non-target plants. They conclude that the reason for the impediment to the development of enantiomer enriched herbicides could be partially attributed to the beneficial balance between/among enantiomers on the herbicidal activity and ecological safety (i.e. phytotoxicity).

Dario Braga et al. (Crystal Growth &Design, vol. 14, no. 3, (2014-02-20), pages 1430-1437) describe solutions of R-imazamox (approximately 1%) in different solvents, as well as two crystalline forms and their salt adducts, and disclose that R-imidazolinones are twice as active as the racemic form.

US 6,214,768 B1 details the use of a composition consisting of R-imazamox (0.01% solution) and auxiliaries against Pitted Morningglory.

CN 107,602,533 A reveals that the herbicidal activity of the R-isomer is higher than that of S-imazamox or racemic imazamox against M. edulis and M. aeruginosa.

US 6,060,430 A discusses the use of a mixture of R-imazamox and R-imazapyr against weeds in imidazolinone-tolerant crops.

US 2007/238618 A1 indicates that an adjuvant containing a polyalkoxylated alcohol phosphate ester enhances the uptake and herbicidal activity of imidazolinone herbicides, including R-imazamox.

US 2014/073510 A1 discloses an adjuvant containing imazamox, polyalkoxylated alcohol phosphate ester, and a polar solvent such as dimethyl sulfoxide or tetramethylene sulfone.

The invention relates to the use of a composition consisting of R-imazamox, any non-racemic mixture of R-imazamox and S-imazamox, wherein the proportion of R-imazamox is at least 80% by weight, or an agriculturally acceptable salt or ester thereof, and one or more auxiliaries customary in crop protection for the selective control of undesirable vegetation in cultures of crop plants, wherein the crop plant is selected from imidazolinone tolerant crops, and wherein the undesirable vegetation comprises acetolactate synthase (ALS) inhibitor resistant species selected from the genera *Alopecurus, Amaranthus, Ambrosia, Digitaria, Echinochloa, Lolium,* and *Setaria.*

The invention furthermore relates to the use of a composition as defined herein for controlling undesirable vegetation in crops which, by genetic engineering, genome editing or by breeding, are resistant or tolerant to imidazolinone herbicides, such as imidazolinone resistant wheat, barley, corn, rice, sunflower, lentils and oilseed rape (canola), preferably sunflower.

Surprisingly, the composition as used in the present invention has better herbicidal activity against harmful plants, in particular against herbicide resistant weed species, than would have been expected by the herbicidal activity of compositions comprising racemic imazamox.

Moreover, the composition as used in the present invention provides good pre- and post-emergence herbicidal activity; in particular, the composition is useful for combating/controlling harmful plants after their emergence (post-emergence). The composition as used in the present invention also shows good crop compatibility, i.e. its use in crops does not result in increased damage, in particular if the composition is applied in crops tolerant to imidazolinone herbicides, crop safety is maintained. Moreover, the composition also shows an accelerated action on harmful plants, i.e. they damage harmful plants more quickly when compared with application of compositions comprising imazamox in its racemic form.

As used herein, the terms "controlling" and "combating" are synonyms.

As used herein, the terms "undesirable vegetation" and "harmful plants" are synonyms.

The term "composition" is understood as a physical admixture of R-imazamox, any non-racemic mixture of R-imazamox and S-imazamox, wherein the proportion of R-imazamox is at least 80% by weight, or an agriculturally acceptable salt or ester thereof, and one or more formulation auxiliaries, such as one or more surfactants.

The compositions as used in the invention contain R-imazamox (A-1), any non-racemic mixture of R-imazamox and S-imazamox, wherein the proportion of R-imazamox is at least 80% by weight (A-2), preferably at least 90%, more preferably at least 95%, or an agriculturally acceptable salt or ester thereof.

As imazamox is a carboxylic acid, the composition may comprise R-imazamox (A-1) or any non-racemic mixture of R-imazamox and S-imazamox, wherein the proportion of R-imazamox is at least 80% by weight (A-2), as such or as a salt of R-imazamox (A-3) or any non-racemic mixture of R-imazamox and S-imazamox, wherein the proportion of R-imazamox is at least 80% by weight (A-4), in particular an alkalimetal salt or an ammonium salt or substituted ammonium salt as defined below. The carboxyl group of imazamox may also be present in esterified form, e.g. in the form of a C₁-C₈-alkoxycarbonyl group or in the form of a C₁-C₄-alkoxy-C₁-C₄-alkoxycarbonyl group. Examples of esters are the methyl, ethyl, propyl, isopropyl, butyl, isobutyl, pentyl, mexyl (1-methylhexyl) or isooctyl (2-ethylhexyl) esters. Examples of C₁-C₄-alkoxy-C₁-C₄-alkyl esters are the straight-chain or branched C₁-C₄-alkoxyethyl esters, for example the methoxyethyl, ethoxyethyl or butoxyethyl (butoyl) esters. Usually, the compositions as used in the invention contain R-imazamox or any non-racemic mixture of R-imazamox and S-imazamox, wherein the proportion of R-imazamox is at least 80% by weight, as such or as a salt of R-imazamox or any non-racemic mixture of R-imazamox and S-imazamox, wherein the proportion of R-imazamox is at least 80% by weight, in particular an alkalimetal salt or an ammonium salt as defined below.

Suitable salts of A-1 and A-2 include the alkali metal salts, preferably the lithium, sodium and potassium salts, the alkaline earth metals salts, e.g. the calcium and magnesium salts, and the transition metal salts, e.g. the manganese, copper, zinc and iron salts, furthermore ammonium and substituted ammonium salts (hereinafter also termed as organoammonium salts), in which one to four hydrogen atoms of ammonium are replaced by C₁-C₈-alkyl, C₁-C₄-alkyl, hydroxy-C₁-C₄-alkyl, in particular hydroxy-C₂-C₄-alkyl, C₁-C₄-alkoxy-C₁-C₄-alkyl, in particular C₁-C₄-alkoxy-C₂-C₄-alkyl, hydroxy-C₁-C₄-alkoxy-C₁-C₄-alkyl, in particular hydroxy-C₂-C₄-alkoxy-C₂-C₄-alkyl, phenyl or benzyl, preferably ammonium, methylammonium, isopropylammonium, dimethylammonium, diisopropylammonium, trimethylammonium, tetramethylammonium, tetraethylammonium, tetrabutylammonium, pentylammonium, hexylammonium, heptylammonium, 2-hydroxyethylammonium (olamine salt), 2-(2-hydroxyethoxy)eth-1-ylammonium (diglycolamine salt), di(2-hydroxyeth-1-yl)ammonium (= diethanolammonium salt or diolamine salt), tri(2-hydroxyethyl)ammonium (= triethanolammonium salt or trolamine salt), mono-, di- and tri(hydroxypropyl)ammonium (= mono-, di- and tripropanolammonium), benzyltrimethylammonium, benzyltriethylammonium, furthermore phosphonium ion salts and sulfonium salts, e.g. tri(C₁-C₄-alkyl)sulfonium such as trimethylsulfonium, and sulfoxonium salts.

Particular embodiments of the compositions as used in the invention are the following compositions 1 to 12:
Composition 1. R-imazamox, or a salt thereof, and one or more formulation auxiliaries.
Composition 2. R-imazamox-ammonium and one or more formulation auxiliaries.
Composition 3. A non-racemic mixture of R-imazamox and S-imazamox, wherein the proportion of R-imazamox is at least 80% by weight, or a salt thereof, and one or more formulation auxiliaries.
Composition 4. A non-racemic mixture of R-imazamox-ammonium and S-imazamox-ammonium, wherein the proportion of R-imazamox-ammonium is at least 80% by weight, and one or more formulation auxiliaries.
Composition 5. A non-racemic mixture of R-imazamox and S-imazamox, wherein the proportion of R-imazamox is at least 85% by weight, or a salt thereof, and one or more formulation auxiliaries.
Composition 6. A non-racemic mixture of R-imazamox-ammonium and S-imazamox-ammonium, wherein the proportion of R-imazamox-ammonium is at least 85% by weight, and one or more formulation auxiliaries.
Composition 7. A non-racemic mixture of R-imazamox and S-imazamox, wherein the proportion of R-imazamox is at least 90% by weight, or a salt thereof, and one or more formulation auxiliaries.
Composition 8. A non-racemic mixture of R-imazamox-ammonium and S-imazamox-ammonium, wherein the proportion of R-imazamox-ammonium is at least 90% by weight, and one or more formulation auxiliaries.
Composition 9. A non-racemic mixture of R-imazamox and S-imazamox, wherein the proportion of R-imazamox is at least 95% by weight, or a salt thereof, and one or more formulation auxiliaries.
Composition 10. A non-racemic mixture of R-imazamox-ammonium and S-imazamox-ammonium, wherein the proportion of R-imazamox-ammonium is at least 95% by weight, and one or more formulation auxiliaries.
Composition 11. A non-racemic mixture of R-imazamox and S-imazamox, wherein the proportion of R-imazamox is at least 98% by weight, or a salt thereof, and one or more formulation auxiliaries.
Composition 12. A non-racemic mixture of R-imazamox-ammonium and S-imazamox-ammonium, wherein the proportion of R-imazamox-ammonium is at least 98% by weight, and one or more formulation auxiliaries.
Composition 13. R-imazamox, or a salt thereof, an adjuvant comprising a polar solvent and a phosphate ester of the formula (A) 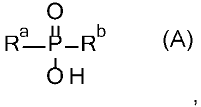 in which
   R^{a} is R¹-O-(CₙH₂ₙO)ₓ-(CₘH₂ₘO)_{y}-,
   R^{b} is R¹-O-(CₙH₂ₙO)ₓ-(CₘH₂ₘO)_{y}- or OH,
   R¹ is C₆-C₃₀-alkyl,
   n, m independently of one another are a value of from 2 to 6,
   x, y independently of one another are a value of from 0 to 100,
   x+y gives a value of from 1 to 100, and
   wherein the phosphate ester of the formula (A) can be present as the free acid and/or as a salt and wherein the polar solvent is dimethyl sulfoxide or tetramethylene sulfone;
   and optionally and one or more further formulation auxiliaries.
Composition 14. R-imazamox-ammonium, an adjuvant comprising a polar solvent and a phosphate ester of the formula (A) 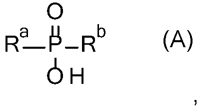 in which
   R^{a} is R¹-O-(CₙH₂ₙO)ₓ-(CₘH₂ₘO)_{y}-,
   R^{b} is R¹-O-(CₙH₂ₙO)ₓ-(CₘH₂ₘO)_{y}- or OH,
   R¹ is C₆-C₃₀-alkyl,
   n, m independently of one another are a value of from 2 to 6,
   x, y independently of one another are a value of from 0 to 100,
   x+y gives a value of from 1 to 100, and
   wherein the phosphate ester of the formula (A) can be present as the free acid and/or as a salt and wherein the polar solvent is dimethyl sulfoxide or tetramethylene sulfone;
   and optionally and one or more further formulation auxiliaries.

In one embodiment, the compositions as used in the invention contain up to 15% (w/v) of R-imazamox, any non-racemic mixture of R-imazamox and S-imazamox, wherein the proportion of R-imazamox is at least 80% by weight, or an agriculturally acceptable salt or ester thereof.

In a preferred embodiment, the compositions as used in the invention contain up to 8% (w/v) of R-imazamox, any non-racemic mixture of R-imazamox and S-imazamox, wherein the proportion of R-imazamox is at least 80% by weight, or an agriculturally acceptable salt or ester thereof.

In a further preferred embodiment, the compositions as used in the invention contain up to 5% (w/v) of R-imazamox, any non-racemic mixture of R-imazamox and S-imazamox, wherein the proportion of R-imazamox is at least 80% by weight, or an agriculturally acceptable salt or ester thereof.

In a further preferred embodiment, the compositions as used in the invention contain up to 3% (w/v) of R-imazamox, any non-racemic mixture of R-imazamox and S-imazamox, wherein the proportion of R-imazamox is at least 80% by weight, or an agriculturally acceptable salt or ester thereof.

In a further preferred embodiment, the compositions as used in the invention contain between 1% (w/v) and 8% (w/v) of R-imazamox, any non-racemic mixture of R-imazamox and S-imazamox, wherein the proportion of R-imazamox is at least 80% by weight, or an agriculturally acceptable salt or ester thereof.

In a further preferred embodiment, the compositions as used in the invention contain between 1.5% (w/v) and 3% (w/v) of R-imazamox, any non-racemic mixture of R-imazamox and S-imazamox, wherein the proportion of R-imazamox is at least 80% by weight, or an agriculturally acceptable salt or ester thereof.

In a more preferred embodiment, the compositions as used in the invention contain up to 3% (w/v) of R-imazamox, or an agriculturally acceptable salt or ester thereof.

In a most preferred embodiment, the compositions as used in the invention contain between 1.5% (w/v) and 3% (w/v) of R-imazamox, or an agriculturally acceptable salt or ester thereof.

The compositions as used in the present invention are useful for controlling monocotyledonous and dicotyledonous species, which are herbicide resistant or tolerant to herbicides selected from acetolactate synthase (ALS) inhibitors (HRAC Group B), selected from the genera Alo*pecurus, Amaranthus, Ambrosia, Digitaria, Echinochloa, Lolium, and Setaria, preferably from the genera Alopecurus, Echinochloa,* and *Lolium.*

The compositions as used in the present invention are suitable for combating/controlling undesired vegetation in legumes, such as beans, lentils, peas, soy beans or in imidazolinone tolerant crops, in particular in imidazolinone tolerant small-grain cereal crops, such as, for example, imidazolinone tolerant wheat, imidazolinone tolerant durum, imidazolinone tolerant triticale, imidazolinone tolerant rye and imidazolinone tolerant barley, but also in imidazolinone tolerant corn, imidazolinone tolerant sugar beet, imidazolinone tolerant potato, imidazolinone tolerant rice, imidazolinone tolerant sunflower and imidazolinone tolerant oilseed rape (canola). The compositions as used in the present invention are particularly suitable for combating/controlling undesired vegetation in legumes, such as beans, lentils, peas, soy beans or in imidazolinone tolerant sunflower, canola, wheat and barley, preferably in imidazolinone tolerant sunflower.

The compositions as used in the invention are particularly useful in crops that are tolerant against imidazolinone herbicides, such as Clearfield^{®} crops, e.g. Clearfield^{®} canola, Clearfield^{®} rice, Clearfield^{®} corn, Clearfield^{®} wheat, Clearfield^{®} Sunflower, Clearfield Lentils, Clearfield Corn, and Cultivance^{®} crops, in particular in Clearfield^{®} Sunflower.

If not stated otherwise, the compositions as used in the invention are suitable for application in any variety of the aforementioned crop plants.

The compositions as used in the present invention can be applied in a conventional manner by a skilled personal familiar with the techniques of applying herbicides. Suitable techniques include spraying, atomizing, dusting, spreading or watering. The type of application depends on the intended purpose in a well known manner; in any case, they should ensure the finest possible distribution of the active ingredients as used in the invention.

The compositions can be applied pre- or post-emergence, i.e. before, during and/or after emergence of the undesirable plants. When the compositions are used in crops, they can be applied after seeding and before or after the emergence of the crop plants. The compositions as used in the invention can, however, also be applied prior to seeding of the crop plants.

It is a particular benefit of the compositions as used in the invention that they have a very good post-emergence herbicide activity, i.e. they show a good herbicidal activity against emerged undesirable plants. Thus, in a preferred embodiment of invention, the compositions are applied post-emergence, i.e. during and/or after, the emergence of the undesirable plants. It is particularly advantageous to apply the compositions as used in the invention post emergent when the undesirable plant starts with leaf development up to flowering. Since the compositions as used in the present invention show good crop tolerance, even when the crop has already emerged, they can be applied after seeding of the crop plants and, in particular, during or after the emergence of the crop plants.

It is also possible to repeat the application, i.e. the first application of the composition is followed by a second application within a timeframe of 7 to 28 days, preferably within a timeframe of 10 to 20 days.

Preferably, the compositions are dilute aqueous compositions.

The compositions are applied to the plants mainly by spraying, in particular foliar spraying. Application can be carried out by customary spraying techniques using, for example, water as carrier and spray liquor rates of 10 to 2000 I/ha or 50 to 1000 I/ha (for example from 50 to 500 I/ha). Application of the herbicidal compositions by the low-volume and the ultra-low-volume method is possible, as is their application in the form of microgranules.

In the case of a post-emergence treatment of the plants, the herbicidal mixtures or compositions as used in the invention are preferably applied by foliar application. Application may be effected, for example, by usual spraying techniques with water as the carrier, using amounts of spray mixture of approx. 50 to 1000 I/ha.

The application rate of R-imazamox, any non-racemic mixture of R-imazamox and S-imazamox, wherein the proportion of R-imazamox is at least 80% by weight, or an agriculturally acceptable salt or ester thereof, calculated as the free acid of imazamox, is generally from 1 to 200 g/ha, in particular from 2 to 100 g/ha, 3 to 80 g/ha, or from 5 to 50 g/ha.

In a preferred embodiment, the application rate of R-imazamox, any non-racemic mixture of R-imazamox and S-imazamox, wherein the proportion of R-imazamox is at least 80% by weight, or an agriculturally acceptable salt or ester thereof, calculated as the free acid of imazamox, is from 1 to 20 g/ha.

In another preferred embodiment, the application rate of R-imazamox, any non-racemic mixture of R-imazamox and S-imazamox, wherein the proportion of R-imazamox is at least 80% by weight, or an agriculturally acceptable salt or ester thereof, calculated as the free acid of imazamox, is from 2 to 10 g/ha.

It may, furthermore, be beneficial to apply the compositions as used in the invention alone or in combination with other herbicides, or else in the form of a mixture with other crop protection agents, for example together with agents for controlling pests or phytopathogenic fungi or bacteria. Also of interest is the miscibility with mineral salt solutions, which are employed for treating nutritional and trace element deficiencies. Other additives, such as non-phytotoxic oils and oil concentrates, may also be added.

### USE EXAMPLES:

The control of resistant weeds by R-imazamox was demonstrated by the following greenhouse experiments:
The culture containers used were plastic flowerpots containing loamy sand with approximately 3.0% of humus as the substrate. The seeds of the test plants were sown separately for each species and/or resistant biotype. For the pre-emergence treatment, the active ingredients, which had been suspended or emulsified in water, were applied directly after sowing by means of finely distributing nozzles. The containers were irrigated gently to promote germination and growth and subsequently covered with transparent plastic hoods until the plants had rooted. This cover caused uniform germination of the test plants, unless this had been impaired by the active ingredients. For the post-emergence treatment, the test plants were first grown to a height of 3 to 15 cm, depending on the plant habit, and only then treated with the active ingredients which had been suspended or emulsified in water. For this purpose, the test plants were either sown directly and grown in the same containers, or they were first grown separately as seedlings and transplanted into the test containers a few days prior to treatment. Depending on the species, the plants were kept at 10 - 25°C or 20 - 35°C, respectively. The test period extended over 2 to 4 weeks. During this time, the plants were tended, and their response to the individual treatments was evaluated. The evaluation was carried out by using a scale from 0 to 100. 100 means no emergence of the plants or complete destruction of at least the above-ground parts, and 0 means no damage, or normal course of growth.
Beyond^{®} herbicide: 120g/l SL formulation of imazamox as racemate (rac)
R-imazamox: tech. material, 120 g/l SL formulation

The plants used in a first greenhouse experiment were of the following species and biotype:

| No. | Bayer code | Scientific name | Common name | Biotype |
|---|---|---|---|---|
| 1 | ECHCO | *Echinocloa colonum* | junglerice | Sensitive |
| 2 | ECHCO | *Echinocloa colonum* | junglerice | Imi resistant biotype LIH02359 |
| 3 | ALOMY | *Alopecurus myosuroides* | blackgrass | Sensitive |
| 4 | ALOMY | *Alopecurus myosuroides* | blackgrass | Imi resistant biotype LIH01370 |
| 5 | ALOMY | *Alopecurus myosuroides* | blackgrass | Imi resistant biotype LIH06467 |
| 6 | LOLMU | *Lolium multiflorum* | Italian ryegrass | Sensitive |
| 7 | LOLMU | *Lolium multiflorum* | Italian ryegrass | Imi resistant biotype LIH02277 |
| 8 | LOLMU | *Lolium multiflorum* | Italian ryegrass | Imi resistant biotype LIH06540 |

The results shown in the following tables demonstrate that R-imazamox has very good activity on both sensitive (1, 3, 6) and resistant weeds (2, 4, 5, 7, 8) whereas rac-imazamox shows much weaker control of resistant in comparison to sensitive biotypes.

**Table 1:**

| Herbicide compound | Use rate | ECHCO control (%) | |
|---|---|---|---|
| | | 1 | 2 |
| R-imazamox | 200 g/ha | 100 | 100 |
| R-imazamox | 100 g/ha | 100 | 98 |
| rac-imazamox | 200 g/ha | 98 | 90 |
| rac-imazamox | 100 g/ha | 98 | 55 |

**Table 2:**

| Herbicide compound | Use rate | ALOMY control (%) | |
|---|---|---|---|
| | | 3 | 4 |
| R-imazamox | 250 g/ha | 100 | 90 |
| R-imazamox | 125 g/ha | 100 | 90 |
| rac-imazamox | 250 g/ha | 100 | 85 |
| rac-imazamox | 125 g/ha | 100 | 80 |

**Table 3:**

| Herbicide compound | Use rate | ALOMY control (%) | |
|---|---|---|---|
| | | 3 | 5 |
| R-imazamox | 125 g/ha | 100 | 95 |
| R-imazamox | 62,5 g/ha | 98 | 95 |
| rac-imazamox | 125 g/ha | 100 | 90 |
| rac-imazamox | 62,5 g/ha | 98 | 85 |

**Table 4:**

| Herbicide compound | Use rate | LOLMU control (%) | | |
|---|---|---|---|---|
| | | 6 | 7 | 8 |
| R-imazamox | 250 g/ha | 100 | 95 | 70 |
| R-imazamox | 125 g/ha | 100 | 90 | 70 |
| rac-imazamox | 250 g/ha | 100 | 85 | 65 |
| rac-imazamox | 125 g/ha | 100 | 80 | 40 |

## Claims

1. The use of a herbicidally active composition consisting of R-imazamox, any non-racemic mixture of R-imazamox and S-imazamox, wherein the proportion of R-imazamox is at least 80% by weight, or an agriculturally acceptable salt or ester thereof, and one or more auxiliaries customary in crop protection for the selective control of undesirable vegetation in cultures of crop plants, wherein the crop plant is selected from imidazolinone tolerant crops, and wherein the undesirable vegetation comprises acetolactate synthase (ALS) inhibitor resistant species selected from the genera *Alopecurus, Amaranthus, Ambrosia, Digitaria, Echinochloa, Lolium,* and *Setaria.*

2. The use according to claim 1, wherein the imidazolinone tolerant crop is selected from sunflower, oilseed rape, rice, legumes, corn, wheat, barley, and sorghum.

3. The use according to claim 1, wherein the imidazolinone tolerant crop is selected from sunflower, oilseed rape, rice, and legumes.

4. The use according to claim 1, wherein the imidazolinone tolerant crop is selected from sunflower and oilseed rape.

5. The use according to claim 1, wherein the imidazolinone tolerant crop is selected from sunflower.

## Patentansprüche

1. Die Verwendung einer herbizideraktiv aktiven Zusammensetzung, bestehend aus R-Imazamox, jeder nicht-racemischen Mischung aus R-Imazamox und S-Imazamox, bei der der Anteil von R-Imazamox mindestens 80 % nach Gewicht beträgt, oder eines landwirtschaftlich akzeptablen Salzes oder Esters davon, und eines oder mehrerer im Pflanzenschutz üblicher Hilfsmittel zur selektiven Kontrolle unerwünschter Vegetation in Kulturen von Nutzpflanzen, wobei die Kulturpflanze aus imidazolinontoleranten Pflanzen ausgewählt wird und wobei die unerwünschte Vegetation aus Acetolaktat-Synthase (ALS)-inhibitorresistenten Arten besteht, die aus den Gattungen Alopecurus, Amaranthus, Ambrosia, Digitaria, Echinochloa, Lolium und Setaria ausgewählt wurden.

2. Die Verwendung gemäß Anspruch 1, bei der die imidazolinontolerante Pflanze aus Sonnenblumen, Raps, Reis, Hülsenfrüchten, Mais, Weizen, Gerste und Sorghum ausgewählt wird.

3. Die Verwendung gemäß Anspruch 1, bei der die imidazolinontolerante Pflanze aus Sonnenblumen, Raps, Reis und Hülsenfrüchten ausgewählt wird.

4. Die Verwendung gemäß Anspruch 1, bei der die imidazolinontolerante Pflanze aus Sonnenblumen- und Raps ausgewählt wird.

5. Die Verwendung gemäß Anspruch 1, bei der die imidazolinontolerante Pflanze aus Sonnenblumen ausgewählt wird.

## Revendications

1. L'utilisation d'une composition herbicide active composée de R-imazamox, tout mélange non racémique de R-imazamox et S-imazamox, dans lequel la proportion de R-imazamox est d'au moins 80 % en poids, ou d'un sel ou d'un ester acceptable pour l'agriculture, et d'un ou plusieurs auxiliaires coutumiers dans la protection des cultures pour le contrôle sélectif de la végétation indésirable dans les cultures de cultures agricoles, où la plante végétale est sélectionnée parmi des cultures tolérantes à l'imidazolinone, et où la végétation indésirable comprend des espèces résistantes à l'inhibiteur de l'acétolactate synthase (ALS) sélectionnées parmi les genres Alopecurus, Amaranthus, Ambrosia, Digitaria, Echinochloa, Lolium et Setaria.

2. L'utilisation selon la revendication 1, où la culture tolérante à l'imidazolinone est sélectionnée parmi le tournesol, le colza, le riz, les légumineuses, le maïs, le blé, l'orge et le sorgho.

3. L'utilisation selon la revendication 1, où la culture tolérante à l'imidazolinone est sélectionnée parmi le tournesol, le colza, le riz et les légumineuses.

4. L'utilisation selon la revendication 1, où la culture tolérante à l'imidazolinone est sélectionnée à partir du tournesol et du colza.

5. L'utilisation selon la revendication 1, où la culture tolérante à l'imidazolinone est sélectionnée à partir du tournesol.
